# EUROPÄISCHE PATENTSCHRIFT

(11) **EP 1 203 000 B1**
(45) Veröffentlichungstag und Bekanntmachung des Hinweises auf die Patenterteilung: **23.04.2003**
(21) Anmeldenummer: 00951493.6
(22) Anmeldetag: 10.08.2000
(51) Int. Cl.: C07F 9/38

(54) **VERFAHREN ZUR HERSTELLUNG VON PHOSPHONOMETHYLGLYCIN**
METHOD FOR THE PRODUCTION OF PHOSPHONOMETHYLGLYCIN
PROCEDE DE PREPARATION DE PHOSPHONOMETHYLGLYCINE

(30) Priorität: 11.08.1999 DE 19937958
(43) Veröffentlichungstag der Anmeldung: 08.05.2002
(73) Patentinhaber: BASF AKTIENGESELLSCHAFT, 67056 Ludwigshafen (DE)
(72) Erfinder: AUST, Nicola, Christiane, D-68199 Mannheim (DE); BUTZ, Thomas, D-68309 Mannheim (DE); FISCHER, Martin, D-67071 Ludwigshafen (DE)
(74) Vertreter: Kinzebach, Werner, Dr.
(86) Internationale Anmeldenummer: EP0007808
(87) Internationale Veröffentlichungsnummer: WO01012639

(56) Entgegenhaltungen:
- EP-A- 0 439 445
- EP-A- 0 464 017
- EP-A- 0 464 018
- BR-A- 9 601 581

## Beschreibung

Die vorliegende Erfindung betrifft ein Verfahren zur Herstellung von Phosphonomethylglycin aus N-Phosphonomethyliminodiessigsäure-N-oxid.

Phosphonomethylglycin, das unter dem common name Glyphosate bekannt ist, ist eine hochwirksame phytotoxische Verbindung, die als Herbizid eingesetzt wird.

Die EP-A-439445 beschreibt die Herstellung von Phosphonomethylglycin ausgehend von N-Phosphonomethyliminodiessigsäure. Diese wird mit einem Peroxid in wäßriger Lösung, ggf. in Anwesenheit einer katalytisch wirkenden Menge einer wasserlöslichen Molybdän-Verbindung, zu dem Zwischenprodukt N-Phosphonomethyliminodiessigsäure-N-oxid oxidiert. Die Umwandlung des N-Oxids in Phosphonomethylglycin erfolgt anschließend in Anwesenheit einer katalytischen Menge einer Metabisulfit-Verbindung und einer wasserlöslichen Molybdän-Verbindung.

Auch die EP-A-464017 beschreibt ein Verfahren zur Herstellung von Phosphonomethylglycin ausgehend von Phosphonomethyliminodiessigsäure unter Anwendung der gleichen Verfahrensstufen. Die Oxidation zu dem erwähnten N-Oxid erfolgt mit einem Peroxid in Anwesenheit einer wasserlöslichen Molybdän- oder Wolfram-Verbindung. Die Umwandlung in Phosphonomethylglycin erfolgt dann unter Verwendung von Eisen, Zink, Aluminium, Vanadium oder Kupfer in Form des Metalles oder unter Verwendung eines Vanadium-, Eisen(II)-oder Kupfer(I)- Salzes als Katalysator.

Schließlich beschreibt auch die EP-A-464018 ein Verfahren zur Herstellung von Phosphonomethylglycin, wobei die Oxidation der Phosphonomethyliminodiessigsäure mit einem Peroxid in Anwesenheit einer wasserlöslichen Wolfram-Verbindung oder eines Gemisches aus einer wasserlöslichen Wolfram- und Molybdän-Verbindung als Katalysator vorgenommen wird. Das N-Oxid wird dann mit Eisenmetall, einer wasserlöslichen Vanadium-Verbindung, einem Eisen(II)-Salz oder einem Gemisch aus einer wasserlöslichen Sulfid-, Sulfitoder Bisulfit-Verbindung und einer wasserlöslichen Molybdat-Verbindung in Kontakt gebracht und in Phosphonomethylglycin überführt.

Den im Stand der Technik beschriebenen Verfahren ist gemeinsam, dass eine wäßrige Lösung des N-Oxids vorgelegt und der Katalysator in diese Lösung gegeben wird. Diese Verfahren sind im technischen Maßstab nur mit großem Aufwand beherrschbar, weil das bei der Umwandlung des N-Oxids in Phosphonomethylglycin gebildete Gas unkontrolliert freigesetzt wird und außerdem ein starker Temperaturanstieg der Reaktionsmischung erfolgt.

Der vorliegenden Erfindung liegt daher die Aufgabe zugrunde, ein Verfahren zur Herstellung von Phosphonomethylglycin zur Verfügung zu stellen, das auch im technischen Maßstab kontrolliert durchführbar ist.

Überraschenderweise wurde nun gefunden, daß diese Aufgabe gelöst wird durch ein Verfahren zur Herstellung von Phosphonomethylglycin, wobei man N-Phosphonomethyliminodiessigsäure-N-Oxid mit einer katalytisch wirksamen Menge mindestens eines Katalysators, der ausgewählt ist unter einem Thionylhalogenid, Ammonium- oder einem Alkalimetalldithionit, einem Dialkylsulfit, Schwefeldichlorid, Schwefeldioxid und schwefliger Säure, gegebenenfalls in Anwesenheit eines Co-Katalysators, in einem Reaktionsraum in Kontakt bringt, indem man das N-Oxid so in den Reaktionsraum zudosiert, dass stets mindestens 50% des in den Reaktionsraum dosierten N-Oxids umgesetzt sind.

Das N-Phosphonomethyliminodiesssigsäure-N-oxid ist bekannt und kann nach mehreren Verfahren hergestellt werden. Beispielsweise kann es gemäß US 3,950,402 oder US 3,954,848 oder gemäß HU 187,347 unter Verwendung von Peroxiden in Anwesenheit von Silber-, Eisen-, Zinn-, Blei-, Mangan- oder Molybdänverbindungen synthetisiert werden. Vorzugsweise jedoch wird das N-Oxid nach einem der in den Europäischen Patentanmeldungen EP 439445 A, EP 464017 A oder EP 464018 A beschriebenen Verfahren hergestellt. Dabei wird N-Phosphonomethyliminodiesssigsäure mit einem Peroxid, wie Wasserstoffperoxid, Perameisensäure, Peressigsäure, Perbenzoesäure, Peroxitrifluoressigsäure, Benzoylperoxid, Benzolpersulfonsäure etc., in Kontakt gebracht. Vorzugsweise verwendet man Wasserstoffperoxid, insbesondere in zumindest stöchiometrischen Mengen, bezogen auf N-Phosphonomethyliminodiessigsäure. Das Wasserstoffperoxid wird im allgemeinen in einer Konzentration im Bereich von 10 bis 70 Gew.-%, insbesondere 30 bis 70 Gew.-% eingesetzt. Die Reaktionstemperatur liegt im allgemeinen im Bereich von etwa 0°C bis 80°C, insbesondere etwa 20°C bis etwa 70°C.

Besonders bevorzugt erfolgt die Oxidation von N-Phosphonomethyliminodiessigsäure in Anwesenheit einer katalytischen Menge einer wasserlöslichen Molybdänverbindung oder einer wasserlöslichen Wolframverbindung oder eines Gemisches davon. Geeignete Molybdänverbindungen sind dem Fachmann bekannt, es ist lediglich erforderlich, daß sie in dem Reaktionsmedium löslich sind. Brauchbare Molybdänverbindungen sind beispielsweise Alkalimetallmolybdate, wie Natriummolybdat, Ammoniummolybdat oder Alkalimetall- oder Ammoniumpolymolybdate, wie Ammonium- oder Natriumdimolybdat.

Auch geeignete Wolframverbindungen sind dem Fachmann bekannt, sie müssen lediglich in dem Reaktionsmedium löslich sein. Brauchbare Wolframverbindungen sind beispielsweise Wolframsäure, 1,2-Wolframatophosphat und Bariumwolframat. Ammoniumwolframat und Alkalimetallwolframate, wie Natriumwolframat, Kaliumwolframat, sind bevorzugt.

Die Menge an Katalysator kann innerhalb weiter Grenzen variieren. Im allgemeinen verwendet man etwa 0,01 bis etwa 5,0 Gew.-%, vorzugsweise etwa 0,01 bis etwa 3,0 Gew.-%, Katalysator, bezogen auf das Gewicht an N-Phosphonomethyliminodiessigsäure.

Das Peroxid wird im allgemeinen in zumindest stöchiometrischen Mengen eingesetzt. Vorzugsweise verwendet man einen geringen Überschuß, insbesondere etwa 1,02 bis 1,20 Molequivalente, besonders bevorzugt 1,05 bis 1,15 Molequivalente, bezogen auf die Menge an Phosphonomethyliminodiessigsäure.

Die Oxidation der N-Phosphonomethyliminodiessigsäure erfolgt in wäßrigem Medium, wobei die N-Phosphonomethyliminodiessigsäure zunächst in Suspension vorliegt und im Laufe der Oxidation zumindest teilweise in Lösung geht. zweckmäßigerweise setzt man die N-Phosphonomethyliminodiessigsäure in hoher Konzentration ein, beispielsweise in Form einer bis zu 60 gew.-%igen, insbesondere bis zu 50 gew.-%igen wäßrigen Suspension. Vorzugsweise setzt man die N-Phosphonomethyliminodiessigsäure in solcher Menge ein, daß nach beendeter Oxidation eine Lösung vorliegt. Der Übergang von der Suspension in die Lösung zeigt an, daß die Oxidationsreaktion im wesentlichen beendet ist, weil das N-Oxid in Wasser wesentlich besser löslich ist als die N-Phosphonomethyliminodiessigsäure.

Die Umwandlung des N-Oxids in das gewünschte Phosphonomethylglycin erfolgt vorzugsweise ausgehend von einer wäßrigen Lösung des N-Oxids. Auch der Katalysator wird vorzugsweise in Form einer wässrigen Lösung verwendet. Schwefeldioxid kann als Gas, ggf. verdünnt mit einem Inertgas, wie Stickstoff, eingesetzt werden. Vorzugsweise verwendet man als Katalysator Schwefeldioxid bzw. schweflige Säure, Thionylchlorid, ein Dialkylsulfit, insbesondere ein Di-C₁-C₄-alkylsulfit, wie Dimethylsulfit, oder ein Alkalimetalldithionit, insbesondere Natriumdithionit, oder Mischungen davon.

Vorzugsweise erfolgt die Umwandlung des N-Oxids in Phosphonomethylglycin in Anwesenheit eines Co-Katalysators, um die Umwandlungsrate zu erhöhen. Geeignete Co-Katalysatoren sind beispielsweise wasserlösliche Vanadiumsalze, wie Vanadylsulfat, oder wasserlösliche Eisen(II)-salze wie Eisen(II)-sulfat oder -chlorid. Bevorzugt verwendet man als Cokatalysator jedoch eine wasserlösliche Molybdänverbindung, wie Ammonium- oder ein Alkalimetallmolybdat, wie Natriummolybdat oder ein Ammonium- oder Alkalimetallpolymolybdat, wie Ammonium- oder Natriumdimolybdat. Besonders bevorzugt ist es, für die Oxidation der N-Phosphonomethyliminodiessigsäure und für die anschließende Umwandlung des N-Oxids den gleichen Co-Katalysator zu verwenden, insbesondere eine der erwähnten Molybdänverbindungen.

Im allgemeinen verwendet man wenigstens 0,01 Gew.-% Katalysator, bezogen auf die Menge an N-Oxid. In der Regel setzt man, bezogen auf das N-Oxid, nicht mehr als 10 Gew.-%, vorzugsweise nicht mehr als 8 Gew.-% Katalysator ein. Bevorzugt liegt die Menge im Bereich von 0,01 Gew.-% bis etwa 6,0 Gew.-%, insbesondere im Bereich von 0,1 bis 5 Gew.-%, bezogen auf das N-Oxid. Falls in der N-Oxid-Lösung noch Reste unverbrauchter Peroxidverbindung, die durch Redoxtitration leicht bestimmt werden können, enthalten sind, und ein durch diese Reste oxidierbarer Katalysator verwendet wird, wird die Menge an Katalysator zweckmäßigerweise um den Anteil erhöht, der durch die Peroxidverbindung verbraucht wird.

Die Menge an Cokatalysator liegt im allgemeinen im Bereich von etwa 0,01 bis etwa 30 Mol-%, vorzugsweise etwa 0,05 bis etwa 10 Mol-%, bezogen auf das N-Oxid. Vorzugsweise verwendet man als Katalysator für die Herstellung des N-Oxids und als Co-Katalysator für dessen Umwandlung in Phosphonomethylglycin die gleiche Verbindung, insbesondere eine wasserlösliche Molybdänverbindung. Der Katalysator wird dann nach der Oxidation nicht aus der Reaktionsmischung entfernt, so daß für die anschließende Umwandlungsreaktion kein Co-Katalysator mehr zugegeben werden muß.

Die Reaktionstemperatur für die Umwandlung des N-Oxids in Phosphonomethylglycin liegt im allgemeinen im Bereich von 10°C bis 100°C, insbesondere 30°C bis 80°C und vorzugsweise 35°C bis 70°C. Für die Umwandlungsreaktion kann das N-Oxid mit dem Katalysator in üblicher Weise in Kontakt gebracht werden.

Das in Kontakt bringen des N-Oxids mit dem Katalysator erfolgt so, dass man das N-Oxid, insbesondere in Form einer wäßrigen Lösung, in den Reaktionsraum zudosiert. Unter "Zudosieren" ist hier zu verstehen, dass das N-Oxid allmählich, d.h. zeitlich kontrolliert, in den Reaktionsraum gegeben und dort mit dem Katalysator, insbesondere in Form einer wäßrigen Lösung, in Kontakt gebracht wird. Dies kann z.B. dadurch erfolgen, daß man die N-Oxidlösung allmählich zulaufen läßt oder in kleinen Anteilen nach und nach zugibt. Dabei ist es nicht erforderlich, dass das gesamte N-Oxid zudosiert wird. Ein Teil, z.B. bis zu 20% oder bis zu 10%, kann im Reaktionsraum vorgelegt werden.

Der Katalysator kann teilweise oder vollständig im Reaktionsraum vorgelegt werden. Falls nur ein Teil des Katalysators vorgelegt wird, kann der Rest ebenfalls in den Reaktionsraum dosiert werden und zwar gleichzeitig oder zeitlich versetzt zum N-Oxid. Alternativ kann der gesamte Katalysator in den Reaktionsraum dosiert werden und zwar ebenfalls gleichzeitig oder zeitlich versetzt zum N-Oxid.

Bei der Umsetzung muß jedoch stets sichergestellt sein, daß mindestens 50%, bevorzugt mindestens 70%, besonders bevorzugt mindestens 90%, des in den Reaktionsraum dosierten N-Oxids umgewandelt sind. Die Umwandlungsrate läßt sich leicht anhand der bei der Umwandlung freigesetzten Kohlendioxidmenge bestimmen. Die Zudosierung des N-Oxids erfolgt demnach so, daß mindestens 50%, bevorzugt mindestens 70% und besonders- bevorzugt mindestens 90% der erwarteten bei der Umwandlungsreaktion anfallenden und der bereits zugegebenen N-Oxid-Menge entsprechenden Menge Kohlendioxid mit einer nur geringen Verzögerung, im allgemeinen maximal 15 Minuten, freigesetzt werden, bevor weitere Anteile der N-Oxid-Lösung zugegeben werden. Dies wird in der Regel erreicht, indem man darauf achtet, daß mindestens 0,01 Mol-% Katalysator, bezogen auf das bereits zudosierte N-Oxid, im Reaktionsgemisch vorhanden sind. Falls die Kohlendioxidentwicklung im Laufe der Umwandlungsreaktion sich verlangsamt oder zum Erliegen kommt, kann man dem Reaktionsgemisch weiteren Katalysator zufügen oder falls ein Teil des Katalysators zudosiert wird, ihn schneller zudosieren.

Der Cokatalysator kann in gleicher Weise wie der Katalysator mit dem N-Oxid in Kontakt gebracht werden.

Bei der Umwandlungsreaktion fällt das Phosphonomethylglycin als Feststoff aus, wenn eine Konzentration von etwa 1,0 Gew.-% im Reaktionsgemisch überschritten wird. Die Reaktion wird zweckmäßigerweise daher so durchgeführt, daß der größte Teil des Phosphonomethylglycins als Feststoff anfällt. Dies ist in der Regel der Fall, wenn man die Konzentration so wählt, dass man eine Suspension mit mindestens 10 Gew.-% suspendiertem Phosphonomethylglycin erhält.

Die Abtrennung des Phosphonomethylglycins aus der erhaltenen Suspension kann nach den üblichen Techniken der Feststoffisolierung erfolgen. Zweckmäßigerweise wird vor der Abtrennung auf < 30°C, insbesondere auf 10 bis 20°C abgekühlt und/oder 1 bis 20 h gerührt. Die nach Abtrennung des Phosphonomethylglycins verbleibende Mutterlauge, die noch gelöstes Phosphonomethylglycin und den Katalysator enthält, kann zumindest teilweise für die Umwandlung von weiterem N-Oxid eingesetzt werden.

Sowohl die Herstellung des N-Oxids als auch die anschließende Umwandlung des N-Oxids in Phosphonomethylglycin können als Batch, Semibatch (Zudosierung von Wasserstoffperoxid bzw. von N-Oxidlösung und gegebenenfalls eines Teils des Katalysators) oder kontinuierlich (gleichzeitige Dosierung aller Komponenten, nämlich N-Phosphonomethyliminodiessigsäure, Oxidationsmittel und gegebenenfalls Katalysator bzw. N-Oxid, Katalysator und gegebenenfalls Cokatalysator) durchgeführt werden.

Die nachfolgenden Beispiele erläutern die Erfindung ohne sie zu begrenzen.

### Beispiel 1:

38 g N-Phosphonomethyliminodiessigsäure und 0,92 g Ammoniummolybdat-Tetrahydrat werden in 100 ml Wasser suspendiert und auf 65°C erwärmt. Man läßt anschließend innerhalb von 30 min 20,6g 30%ige Wasserstoffperoxid-Lösung zutropfen und rührt eine Stunde bei 65°C nach, wobei sich eine klare Lösung bildet. Der Test auf H₂O₂ ist negativ. Bei 40°C wird diese N-Oxid-Lösung zu 10 ml einer mit SO₂ gesättigten wäßrigen Lösung innerhalb von 30 min zugetropft. Man beobachtet hierbei eine stetige Gasentwicklung. Schon im Verlauf der N-Oxid-Dosierung bildet sich ein farbloser Niederschlag. Danach wird noch 1 h bei 40°C gerührt. Bei Raumtemperatur wird der ausgefallene Niederschlag abfiltriert und getrocknet. Auf diese Weise können 23,2 g N-Phosphonomethylglycin mit einer Reinheit von 96% isoliert werden. Dies entspricht einer Ausbeute von 79%, bezogen auf die eingesetzte Menge N-Phosphonomethyliminodiessigsäure.

### Beispiel 2:

38 g N-Phosphonomethyliminodiessigsäure und 0,92 g Amnioniummolybdat-Tetrahydrat werden in 100 ml Wasser suspendiert und auf 65°C erwärmt. Man läßt anschließend innerhalb von 30 min 20,6 g 30%ige Wasserstoffperoxid-Lösung zutropfen und rührt eine Stunde bei 65°C nach, wobei sich eine klare Lösung bildet. Der Test auf H₂O₂ ist negativ. Die Lösung wird auf Raumtemperatur abgekühlt. Zu 10 ml Wasser, durch die ein Gasgemisch von SO₂ und N₂ durchgeleitet worden ist, wird die N-Oxid-Lösung in 30 min zugetropft. Während der N-Oxid-Zugabe wird eine Mischung aus SO₂ und N₂ in die Lösung nachdosiert. Es zeigt sich dabei eine stetige Gasentwicklung und eine Temperaturerhöhung auf 55°C. Anschließend wird 30 min bei 5°C gerührt. Der ausgefallene Niederschlag wird abfiltriert und getrocknet. Auf diese Weise können 22,0 g N-Phosphonomethylglycin mit einer Reinheit von 98% isoliert werden. Dies entspricht einer Ausbeute von 76%, bezogen auf die eingesetzte Menge N-Phosphonomethyliminodiessigsäure.

### Beispiel 3:

60 g N-Phosphonomethyliminodiessigsäure und 1,23 g Ammoniummolybdat-Tetrahydrat werden in 75 ml Wasser suspendiert und auf 55°C erwärmt. Man läßt anschließend 19,8 g 50%ige Wasserstoffperoxid-Lösung in 15 min zutropfen und rührt 1,5 h bei 65°C nach, wobei sich eine klare Lösung bildet. Im nächsten Schritt werden 2 ml gesättigte SO₂-Lösung und 15% der hergestellten N-Oxid-Lösung bei 40°C vorgelegt. Dann wird N-Oxid so zugetropft, dass die gebildete CO₂-Molmenge ca. 70% der zugetropften N-Oxid-Molmenge entspricht. So haben sich z.B. nach Zulauf von insgesamt 30% der N-Oxid-Lösung 1,7 1 CO₂ gebildet. Durch diese Dosierweise wird verhindert, dass sich N-Oxid in der Lösung anreichert. Verlangsamt sich die CO₂-Entwicklung, wird die SO₂-Lösung so zugegeben, dass die gebildete CO₂-Menge wiederum ca. 70% des zugetropften N-Oxids entspricht. Auf diese Weise wird CO₂ kontinuierlich freigesetzt. Nachdem die gesamte N-Oxid-Lösung und 15 ml SO₂-Lösung in 1,5 h zugetropft worden sind, ist nach weiteren 15 min keine Gasentwicklung mehr zu beobachten. Insgesamt haben sich 4,3 1 CO₂ gebildet. Die Lösung wird auf Raumtemperatur abgekühlt, der ausgefallene Niederschlag abgesaugt und getrocknet. Es werden 35 g reines N-Phosphonomethylglycin isoliert, was einer Ausbeute von 78%, bezogen auf die eingesetzte Menge N-Phosphonomethyliminodiessigsäure, entspricht.

### Beispiel 4:

60 g N-Phosphonomethyliminodiessigsäure und 1,23 g Ammoniummolybdat-Tetrahydrat werden in 75 ml Wasser suspendiert und auf 55°C erwärmt. Man läßt anschließend 19,8 g 50%ige Wasserstoffperoxid-Lösung in 15 min zutropfen und rührt 1,5 h bei 65°C nach, wobei sich eine klare Lösung bildet. Im nächsten Schritt werden 5 Tropfen Thionylchlorid und 20 ml der hergestellten N-Oxid-Lösung bei 40°C vorgelegt und dann wird in 10 ml-Schritten N-Oxid-Lösung zugetropft. Zeigt sich bei weiterer N-Oxid-Zugabe eine Verlangsamung der Gasentwicklung, wird durch weitere tropfenweise Zugabe von Thionychlorid die Gasentwicklung auf einem stetigen Niveau gehalten. Nachdem die gesamte N-Oxid-Lösung und 18 Tropfen Thionylchlorid in 1,5 h zugetropft worden sind, ist nach einer weiteren Stunde keine Gasentwicklung mehr zu beobachten. Insgesamt haben sich 4 1 CO₂ gebildet. Die Lösung wird auf Raumtemperatur abgekühlt und der ausgefallene Niederschlag wird abgesaugt und getrocknet. Es werden 41,0 g N-Phosphonomethylglycin in einer Reinheit von 79% isoliert, was einer Ausbeute von 73%, bezogen auf die eingesetzte Menge N-Phosphonomethyliminodiessigsäure, entspricht.

### Beispiel 5:

38 g N-Phosphonomethyliminodiessigsäure und 0,92 g Ammoniummolybdat-Tetrahydrat werden in 100 ml Wasser suspendiert und auf 65°C erwärmt. Man läßt anschließend innerhalb von 20 min 20,6 g 30%ige Wasserstoffperoxid-Lösung zutropfen und rührt 40 min bei 65°C nach, wobei sich eine klare Lösung bildet. Der Test auf H₂O₂ ist positiv. 1,0 g Natriumdithionit gelöst in 15 ml Wasser werden vorgelegt. Bei 40°C wird innerhalb von 75 min die N-Oxid-Lösung unter stetiger Gasentwicklung zudosiert. Anschließend wird 1,5 h bei 40°C nachgerührt. Bei Raumtemperatur wird der ausgefallene Niederschlag abfiltriert und getrocknet. Auf diese Weise können 19,2 g reines N-Phosphonomethylglycin isoliert werden. Dies entspricht einer Ausbeute von 68% bezogen auf die eingesetzte Menge N-Phosphonomethyliminodiessigsäure.

### Beispiel 6:

38 g N-Phosphonomethyliminodiessigsäure und 0,92 g Ammoniummolybdat-Tetrahydrat werden in 100 ml Wasser suspendiert und auf 65°C erwärmt. Man läßt anschließend innerhalb von 30 min 20,6 g 30%ige Wasserstoffperoxid-Lösung zutropfen und rührt 1 h bei 65°C nach, wobei sich eine klare Lösung bildet. Die Lösung wird auf 40°C abgekühlt und anschließend dosiert man 2,1 g Schwefeldichlorid tropfenweise zu. Bei 40°C wird 1,5 h nachgerührt. Der ausgefallene Niederschlag wird bei Raumtemperatur abfiltriert und getrocknet. Auf diese Weise können 21,0 g N-Phosphonomethylglycin in einer Reinheit von 95% isoliert werden. Dies entspricht einer Ausbeute von 71%, bezogen auf die eingesetzte Menge N-Phosphonomethyliminodiessigsäure.

### Beispiel 7:

38 g N-Phosphonomethyliminodiessigsäure und 0,92 g Ammoniummolybdat-Tetrahydrat werden in 100 ml Wasser suspendiert und auf 65°C erwärmt. Man läßt anschließend innerhalb von 20 min 20,6 g 30%ige Wasserstoffperoxid-Lösung zutropfen und rührt 40 min bei 65°C nach, wobei sich eine klare Lösung bildet. 1,8 g Dimethylsulfit gelöst in 15 ml Wasser werden vorgelegt. Bei 40°C wird innerhalb von 75 min die N-Oxid-Lösung unter stetiger Gasentwicklung zudosiert. Anschließend wird 1,5 h bei 40°C nachgerührt. Bei Raumtemperatur wird der ausgefallene Niederschlag abfiltriert und getrocknet. Auf diese Weise können 21,5 g reines N-Phosphonomethylglycin isoliert werden. Dies entspricht einer Ausbeute von 76% bezogen auf die eingesetzte Menge N-Phosphonomethyliminodiessigsäure.

### Beispiel 8:

In einen 6 m³ Rührkessel werden 3550 1 Wasser pro Stunde gepumpt und 2500 kg/h Phosphonomethyliminodiessigsäure mit einer Zellradschleuse eindosiert. Die dabei entstehende Suspension wird synchron mit einer Lösung von 870 kg/h 50%igem Wasserstoffperoxid und 450 kg/h einer Lösung von 12 Gew.-% Ammoniummolybdat in Wasser in einen 6 m³ Rührkessel gepumpt. Der Reaktionskessel wird über einen Kühlmantel so mit Wasser gekühlt, dass sich unter Rühren eine Temperatur von 65°C einstellt.

Das Reaktionsgemisch wird kontinuierlich in einen zweiten 6 m³ Kessel gepumpt, in dem es ebenfalls bei 65°C gerührt wird. Von dort aus wird es kontinuierlich in einen dritten 6 m³ Rührkessel gepumpt, in den über ein Tauchrohr ein Strom von 18000 1/h Schwefeldioxid eindosiert werden. Die Temperatur in dem dritten Reaktor wird über den Kühlmantel auf 45°C eingestellt. Es entwickelt sich ein Gasstrom von 220 m³/h Kohlendioxid, der in einem Natronlaugewäscher absorbiert wird.

Die Suspension wird in einen vierten 6 m³ Rührkessel gepumpt, der bei 50°C gehalten wird. Hier werden weitere 27 m³/h Kohlendioxid freigesetzt, die ebenfalls auf den Wäscher geführt werden.

Die in diesem Kessel erhaltene Suspension von Phosphonomethylglycin in Wasser wird in einen 6 m³ Kessel gepumpt, in dem auf 20°C gekühlt wird. Von dort aus wird die Suspension kontinuierlich auf eine Zentrifuge geführt, in der 1767 kg/h feuchtes N-Phosphonomethylglycin mit einem Trockengehalt von 90% von dem wässrigen Filtrat abgetrennt werden.

## Patentansprüche

1. Verfahren zur Herstellung von N-Phosphonomethylglycin, wobei man N-Phosphonomethyliminodiessigsäure-N-oxid mit einer katalytisch wirksamen Menge mindestens eines Katalysators, der ausgewählt ist unter einem Thionylhalogenid, Ammonium- oder einem Alkalimetalldithionit, einem Dialkylsulfit, Schwefeldichlorid, Schwefeldioxid und schwefliger Säure, in einem Reaktionsraum in Kontakt bringt, indem man das N-Phosphonomethyliminodiessigsäure-N-oxid so in den Reaktionsraum zudosiert, dass stets mindestens 50% des in den Reaktionsraum dosierten N-Oxids umgesetzt sind.

2. Verfahren nach Anspruch 1, wobei man als Katalysator Schwefeldioxid, schweflige Säure, Thionylchlorid, ein Dialkylsulfit oder ein Alkalimetalldithionit verwendet.

3. Verfahren nach Anspruch 1 oder 2, wobei man zusätzlich einen Co-Katalysator einsetzt.

4. Verfahren nach Anspruch 3, wobei man als Co-Katalysator eine wasserlösliche Molybdänverbindung, insbesondere Ammoniummolybdat oder ein Alkalimetallmolybdat, verwendet.

5. Verfahren nach einem der vorhergehenden Ansprüche, wobei das N-Oxid zu einer wäßrigen Lösung des Katalysators dosiert wird.

6. Verfahren nach einem der Ansprüche 1 bis 4, wobei das N-Oxid und der Katalysator gleichzeitig und voneinander getrennt in den Reaktionsraum dosiert werden.

7. Verfahren nach einem der vorhergehenden Ansprüche, wobei man das N-Phosphonomethyliminodiessigsäure-N-oxid so zudosiert, dass stets mindestens 70% des in den Reaktionsraum dosierten N-Oxids umgesetzt sind.

8. Verfahren nach einem der vorhergehenden Ansprüche, wobei die Herstellung des N-Phosphonomethyliminodiessigsäure-N-oxids durch Oxidation von N-Phosphonomethyliminodiessigsäure erfolgt.

9. Verfahren nach Anspruch 8, wobei man die Oxidation mit einer Peroxidverbindung durchführt.

10. Verfahren nach Anspruch 9, wobei die Oxidation in Anwesenheit eines Oxidationskatalysators, insbesondere einer wasserlöslichen Molybdänverbindung, erfolgt.

11. Verfahren nach Anspruch 10, wobei man als Katalysator für die Oxidation der N-Phosphonomethyliminodiessigsäure und als Co-Katalysator für die Umwandlung des N-Oxids den gleichen Katalysator verwendet.

12. Verfahren nach einem der vorhergehenden Ansprüche, wobei man N-Phosphonomethyliminodiessigsäure mit einer Peroxidverbindung in Anwesenheit einer katalytisch wirksamen Menge einer wasserlöslichen Molybdänverbindung zu N-Phosphonomethyliminodiessigsäure-N-oxid oxidiert und das Reaktionsgemisch anschließend mit dem Katalysator in Kontakt bringt, indem man es in den Reaktionsraum dosiert.

## Claims

1. A process for the preparation of N-phosphonomethylglycine, wherein N-phosphonomethyliminodiacetic acid N-oxide is brought into contact with a catalytically active quantity of at least one catalyst, selected from amongst a thionyl halide, ammonium dithionite or an alkali metal dithionite, a dialkyl sulfite, sulfur dichloride, sulfur dioxide and sulfurous acid, in a reaction chamber by metering the N-phosphonomethyliminodiacetic acid N-oxide into the reaction chamber in such a way that always at least 50% of the N-oxide metered into the reaction chamber are converted.

2. A process as claimed in claim 1, wherein the catalyst used is sulfur dioxide, sulfurous acid, thionyl chloride, a dialkyl sulfite or an alkali metal dithionite.

3. A process as claimed in claim 1 or 2, wherein a cocatalyst is additionally employed.

4. A process as claimed in claim 3, wherein the cocatalyst employed is a water-soluble molybdenum compound, in particular ammonium molybdate or an alkali metal molybdate.

5. A process as claimed in any of the preceding claims, wherein the N-oxide is metered into an aqueous solution of the catalyst.

6. A process as claimed in any of claims 1 to 4, wherein the N-oxide and the catalyst are metered into the reaction chamber simultaneously and separately.

7. A process as claimed in any of the preceding claims, wherein the N-phosphonomethyliminodiacetic acid N-oxide is metered in in such a way that always at least 70% of the N-oxide metered into the reaction chamber are converted.

8. A process as claimed in any of the preceding claims, wherein the N-phosphonomethyliminodiacetic acid N-oxide is prepared by oxidizing N-phosphonomethyliminodiacetic acid.

9. A process as claimed in claim 8, wherein the oxidation is performed with a peroxide compound.

10. A process as claimed in claim 9, wherein the oxidation is performed in the presence of an oxidation catalyst, in particular a water-soluble molybdenum compound.

11. A process as claimed in claim 10, wherein the same catalyst is used as catalyst for oxidizing the N-phosphonomethyliminodiacetic acid and as cocatalyst for converting the N-oxide.

12. A process as claimed in any of the preceding claims, wherein N-phosphonomethyliminodiacetic acid is oxidized with a peroxide compound in the presence of a catalytically effective quantity of a water-soluble molybdenum compound to give N-phosphonomethyliminodiacetic acid N-oxide and the reaction mixture is subsequently brought into contact with the catalyst by metering it into the reaction chamber.

## Revendications

1. Procédé pour la préparation du N-phosphonométhylglycocolle dans lequel on met en contact le N-oxyde de l'acide N-phosphonométhyliminodiacétique avec une quantité efficace d'au moins un catalyseur choisi dans le groupe consistant en un halogénure de thionyle, un dithionite d'ammonium ou de métal alcalin, un sulfite de dialkyle, le dichlorure de soufre, le dioxyde de soufre et l'acide sulfureux dans un espace de réaction dans lequel on introduit le N-oxyde de l'acide N-phosphonométhyliminodiacétique à un débit tel qu'il y ait toujours au moins 50 % du N-oxyde introduit dans l'espace de réaction qui aient été convertis.

2. Procédé selon la revendication 1, selon lequel le catalyseur utilisé est le dioxyde de soufre, l'acide sulfureux, le chlorure de thionyle, un sulfite de dialkyle ou un dithionite de métal alcalin.

3. Procédé selon la revendication 1 ou 2, selon lequel on utilise en outre un catalyseur auxiliaire.

4. Procédé selon la revendication 3, selon lequel le catalyseur auxiliaire utilisé est un dérivé hydrosoluble du molybdène, plus spécialement le molybdate d'ammonium ou un molybdate de métal alcalin.

5. Procédé selon l'une des revendications qui précèdent selon lequel on ajoute le N-oxyde à une solution aqueuse du catalyseur.

6. Procédé selon l'une des revendications 1 à 4, selon lequel on introduit le N-oxyde et le catalyseur en même temps, mais séparément dans la chambre de réaction.

7. Procédé selon l'une des revendications qui précèdent selon lequel on ajoute le N-oxyde de l'acide N-phosphonométhyliminodiacétique à un débit tel qu'il y ait toujours au moins 70 % du N-oxyde introduit dans la chambre de réaction qui aient été convertis.

8. Procédé selon l'une des revendications qui précèdent selon lequel le N-oxyde de l'acide N-phosphonométhyliminodiacétique a été préparé par oxydation de l'acide N-phosphonométhyliminodiacétique.

9. Procédé selon la revendication 8 selon lequel l'oxydation a été réalisée à l'acide d'un dérivé peroxydé.

10. Procédé selon la revendication 9, selon lequel l'oxydation est réalisée en présence d'un catalyseur d'oxydation, plus spécialement un dérivé hydrosoluble du molybdène.

11. Procédé selon la revendication 10, selon lequel on utilise le même catalyseur en tant que catalyseur de l'oxydation de l'acide N-phosphonométhyliminodiacétique et en tant que catalyseur auxiliaire pour la conversion du N-oxyde.

12. Procédé selon l'une des revendications qui précèdent, selon lequel on oxyde l'acide N-phosphonométhyliminodiacétique en N-oxyde de l'acide N-phosphonométhyliminodiacétique à l'aide d'un dérivé peroxydé. et en présence d'une quantité catalytique efficace d'un dérivé hydrosoluble du molybdène puis on met le mélange de réaction en contact avec le catalyseur en l'introduisant dans la chambre de réaction.
